# EUROPÄISCHE PATENTANMELDUNG

(11) **EP 3 351 505 A1**
(43) Veröffentlichungstag der Anmeldung: **25.07.2018**
(21) Anmeldenummer: 17152417.6
(22) Anmeldetag: 20.01.2017
(51) Int. Cl.: C01B 7/07, C02F 1/66, C02F 1/461, G06Q 10/00, C02F 101/12

(54) **VERFAHREN ZUR FLEXIBLEN STEUERUNG DER VERWENDUNG VON SALZSÄURE AUS CHEMISCHER PRODUKTION**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Es wird ein Verfahren zur flexiblen Steuerung der Verwendung von Salzsäure mit einer HCl-Konzentration von mindestens 10 Gew.-%, insbesondere mit einem Volumenstrom von mindestens 1 m³/h, erhalten aus einem kontinuierlichen chemischen Produktionsverfahren (A) beschrieben, bei dem gereinigte Salzsäure (54) aus einem Salzsäurelager (E) wahlweise einer Versandstation (H), einer HCl-Elektrolyse-Station (F) und einer Chloralkali-Elektrolyse-Station (L), welche Abnahmestellen für die Salzsäure sind, oder einer Neutralisationsstation (G) zugeführt wird, indem bei Ausfall einer oder mehrerer der vorgenannten Abnahmestellen (H, F, L) oder bei Abnahmeengpässen der Abnahmestellen (H, F, L) die Salzsäure (54) der Neutralisationsstation (G) zugeführt und mit konzentrierter Alkalilauge (55), insbesondere mit konzentrierter Natronlauge, neutralisiert wird und die dabei entstehende Salzlösung (56) wahlweise der ChloralkaliElektrolyse-Station (L) oder einer Entsorgungsstation (M) zugeführt wird.

## Beschreibung

Die Erfindung betrifft ein Verfahren zur flexiblen Steuerung der Verwendung von Salzsäure aus chemischer Produktion im industriellen Maßstab sowie eine Anlage hierzu.

Die Erfindung geht aus von an sich bekannten industriellen Prozessen zur Neutralisation von Salzsäure, die beispielsweise als Reaktionsnebenprodukt bei der Herstellung von Kunststoff oder Kunststoffvorprodukten entsteht.

Bei der Herstellung von chemischen Produkten, bei der Chlor als Mediator eingesetzt wird, z.B. bei der Herstellung von Isocyanaten gemäß der EP 289 840 B1 oder Polycarbonat gemäß der EP 2371806A fällt Chlorwasserstoff an, der ökologisch und ökonomisch weiterverarbeitet werden muss. Hierzu sind einige Verfahren beschrieben. Insbesondere das Recycling durch Elektrolyse, zum Beispiel mithilfe der HCl-Diaphragma-Elektrolyse, der HCl-SVK Elektrolyse oder der katalytischen Gasphasenoxidation mittels Sauerstoff, dem sogenannten Deacon-Prozess, sind bekannte Verfahren zur Gewinnung von Chlor aus Chlorwasserstoff oder Salzsäure.

Um den Chlorwasserstoff weiter zu verarbeiten, muss dieser gereinigt und ggf. in Wasser absorbiert werden, um Salzsäure herzustellen.

Die Reinigung von Chlorwasserstoff kann zum Beispiel gemäß der US 6719957 durch Verflüssigung und Destillation erfolgen. Die kondensierten organischen Verunreinigungen können dabei entfernt werden. In der EP 1743882 B1 wird auch die Chlorwasserstoffreinigung an A-Kohle beschrieben, wobei auch andere Adsorptionsmittel möglich sind.

Die weitere Verarbeitung des Chlorwasserstoffs erfolgt durch Absorption mit Wasser zu einer Salzsäure, die gelagert, filtriert und dann durch Salzsäure-Elektrolyse mit Diaphragma zu Chlor und Wasserstoff recycelt werden kann (Hydrochloric Acid Electrolysis (2012), ThyssenKrupp Uhde GmbH, Seite 17: http://www.thyssenkrupplectrolysis.com/fileadmin/documents/brochures/Hydrochloric_Acid_Elect rolysis.pdf).

Die Absorption des Chlorwasserstoffes zur Bildung von Salzsäure kann nach verschiedenen Verfahren erfolgen z.B. beschrieben im Handbook of Chlor-Alkali Technology (2005), Seite 1364.

Die Reinigung von Salzsäure kann durch unterschiedliche Verfahren erfolgen. Ein Verfahren ist die Reinigung, bei dem die Salzsäure mittels Wasserdampf gestrippt wird (Ullmann Encyclopedia of Industrial Chemistry, Vol. 18, 2002, Wiley-VCH Verlag GmbH & Co. KGaA, Weinheim, Hydrochloric Acid, p 191 ff., EP 1743882 B1, insbesondere Anspruch 1)

Die EP 1743882 B1 beschreibt weiterhin, dass anorganische Verunreinigungen mittels chelatbildender Ionenaustauscher entfernt werden.

Die gereinigte Salzsäure kann dann zum Recycling, d.h. der Bildung von Chlor, welches in den chemischen Prozess zurückgeführt wird, in einer Salzsäure-Elektrolyse mit Diaphragma oder mit Gasdiffusionselektroden eingesetzt werden.

Wird dagegen bereits der Chlorwasserstoff aus dem chemischen Produktionsverfahren abgetrennt, so kann dieser gemäß dem Deacon Prozess einer Gasphasenoxidation unterworfen werden und mit Sauerstoff zu Chlor und Wasser umgesetzt werden. Diese Abnahmestelle für Chlorwasserstoff kann nur dann genutzt werden, wenn ein Deacon Prozess am Standort oder in dessen Nähe zur Verfügung steht und Chlorwasserstoff aus dem chemischen Prozess anfällt.

Die Umsetzung gemäß dem Deacon Prozess ist jedoch nicht vollständig, so dass der nicht umgesetzter Chlorwasserstoff von dem Reaktionsprodukt Chlor zusammen mit dem gebildeten Wasser abgetrennt werden muss. Die dabei entstehende Salzsäure muss ebenfalls einer geeigneten Aufarbeitung oder Verwendung zugeführt werden. Der Deacon Prozess stellt einen sehr wirtschaftlichen alternativen Recyclingprozess dar.

Im Stand der Technik wird jedoch nicht beschrieben, wie technische Mengen an Salzsäure oder Chlorwasserstoff gehandhabt werden können, wenn die dem chemischen Produktionverfahren angeschlossenen Abnahmestellen kurzfristig nicht verfügbar sind. Bei technischen Prozessen fallen große Volumenströme an Chlorwasserstoff bzw. Salzsäure von mehr als 1 m³/h an, die recycelt, verkauft, d.h. einer weiteren geeigneten Nutzung zugeführt oder entsorgt werden müssen. Eine Lagerung von größeren Mengen Salzsäure ist nur für eine kurze befristete Zeit möglich, da die Lagerkapazitäten nicht extrem groß gewählt werden. So sind für die Lagerung der Salzsäure von einem Tag aus einer Isocyanatproduktion, z.B. einer Toluoldiisocynant-Produktion (TDI) mit einer beispielhaften Kapazität von 100.000 t/a eine Lagerkapazität von 750 m³ Salzsäure (30 Gew.%) notwendig. Die Investition für Lagerkapazitäten als auch der damit verbundene erhöhte Wartungsaufwand verschlechtern die Wirtschaftlichkeit einer Großproduktion erheblich. Grund hierfür sind die hoch korrosiven Eigenschaften der Salzsäure die hochwertige Werkstoffe für die Lagerbehälter und einen hohen Instandhaltungsaufwand erfordern.

Durch Verknappung in den Absatzwegen von Salzsäure, der beschränkten Lagerkapazität und der limitierten vorhandenen Recycling-Kapazität kann es vorkommen, dass die chemischen Prozesse, in denen Chlorwasserstoff gebildet wird, abgestellt werden müssen, da die bei diesen Prozessen entstehenden Salzsäure-Mengen nicht mehr entsorgt werden können. Dies hat einen immensen wirtschaftlichen Schaden zur Folge.

Weiterhin sind chemische Produktionsstätten vielfach historisch gewachsen, d.h. dass die Kapazität der chemischen Produktion wie der Isocyanat-Herstellung oder die Elektrolyse als auch Lager für Salzsäure nicht vollständig aufeinander abgestimmt sind.

Aus dem Lager wird ein Teil der Salzsäure alternativ auch anderen chemischen Prozessen zur Verfügung gestellt und üblicherweise mittels Bahnkesselwagen, Schiffen oder LKWs zur den weiteren Verbrauchsstellen transportiert. Die Salzsäure wird dabei aus der laufenden chemischen Produktion, bei dem die Salzsäure gebildet wird und dem Lager über eine Versandstation verladen. Dabei können dann kritische Situationen eintreten, wenn höhere Mengen Salzsäure gelagert oder recycelt werden müssen, als über die Versandstation abgegeben werden können.

Dies kann der Fall sein z.B. an Feiertagen, an denen Fahrverbote für LKWs gelten, sowie bei Hoch-Tiefwasser für den Schifftransport oder mangelnde Verfügbarkeit von Bahnkesselwagen oder LKWs. Auch der Ausfall im Bereich der Recyclingverfahren kann zu einem dramatischen Überschuss an Salzsäure führen, welches letztendlich dazu führt, dass die laufende chemische Produktion abgestellt werden muss.

Die Maßnahme der größeren Dimensionierung von Lagertanks stellt wie oben beschrieben keine wirtschaftlich alternative Lösung dieses technischen Problems dar. Je nach Dimensionierung der Lager sind diese unter Umständen entweder viel zu groß oder zu klein konzipiert. Sind große Lagerkapazitäten installiert und diese durch Absatzengpässe vollständig gefüllt, kann die gelagerte Salzsäure auch in der nachfolgenden Zeit nicht im Markt abgesetzt werden, da auch hier nur beschränkte Aufnahmekapazitäten vorhanden sind.

Eine höhere Kapazität der genannten Recyclingverfahren zu installieren ist ebenfalls eine technisch und wirtschaftlich nicht erwünschte Vorgehensweise.

Somit müsste die Produktion der chemischen Prozesse, die Chlorwasserstoff oder Salzsäure als Nebenprodukt liefern, gedrosselt oder eingestellt werden, um die anfallende Chlorwasserstoff-Menge zu reduzieren. Damit würde der chemische Prozess wiederum unwirtschaftlicher und die verminderte Produktion zu fehlender Absatzmenge an chemischen Produkten zu Umsatz- und Gewinneinbußen führen. Hinzu kommt, dass viele kontinuierlich arbeitende Produktionsverfahren nicht immer vollständig schadensfrei abgestellt werden können. So entstehen off-spec Produktchargen als auch ein erhöhter Verschleiß in den Anlagenteilen. Weiterhin können die meisten kontinuierlichen Produktionsprozesse nicht auf verminderter Last betrieben werden, da Anlagenkomponenten wie Pumpen, Wärmetauscher, Reaktorvolumina hierfür nicht ausgelegt wurden.

Weiterhin unterliegt der Verkauf von Salzsäure einem sehr volatilen Markt, der nur bedingt die Abgabe großer Salzsäure-Mengen kurzfristig flächendeckend sichert. Es ist eine logistische Herausforderung entsprechend Salzsäure-Mengen zu vermarkten, um die Produktion der korrespondierenden Menge an chemischen Produkten sicherzustellen.

Aufgabe der Erfindung ist es, ein flexibles Salzsäure-Management zu etablieren, das ein Abstellen oder die Drosselung des chemischen Produktionsprozesses, der Chlorwasserstoff bzw. Salzsäure als Nebenprodukt liefert, vermeidet.

Bevorzugt wird der Chlorwasserstoff oder die erhaltene Salzsäure nach Reinigung dem Verkauf zugeführt. Salzsäure ist in der chemischen Industrie als anorganische Säure von großer Bedeutung. Salzsäure wird beispielsweise bei der Aufarbeitung von Erzen und Rohphosphat eingesetzt. Sie wird bei der Säurebehandlung von Erdöl- und Erdgas-Quellen verwendet sowie in der Metallverarbeitung beim Beizen, Ätzen und Löten. Als Lebensmittelzusatzstoff trägt Salzsäure die Bezeichnung E 507. Kann am Standort, wo die Salzsäure anfällt, diese nicht mehr verkauft oder abgegeben werden, so wird die Lagerkapazität schnell ausgeschöpft. Setzt der Verkauf nicht wieder ein, müssen frühzeitig alternative Recyclingprozesse eingesetzt werden. Hierzu zählen die HCl-Diaphragma-, die HCl-SVK-Elektrolyse oder die Gasphasenoxidation gemäß dem Deacon Verfahren.

Kann die Salzsäure nicht mehr gelagert und nicht mehr in den Markt abgegeben werden und sind die HCl-Recyclingverfahren wie Gasphasenoxidation, Salzsäure Elektrolyse wie HCl-Diaphragma- oder HCl-SVK Elektrolyse ausgelastet oder nicht verfügbar und kann die Salzsäure auch nicht mehr in der Chlor-Alkali-Elektrolyse aufgenommen werden bleibt nur noch der Weg, die Salzsäure zu neutralisieren. Da es sich um große Volumenströme Salzsäure handelt, stellt die Neutralisation eine technische Herausforderung dar und kann dabei insbesondere wie folgt durchgeführt werden.

Die chemischen Grundlagen der Neutralisation sind in der Literatur umfangreich beschrieben. Gemäß dem Arrhenius-Konzept (1887) und deren Erweiterung durch Bronsted-Lowry (1923) handelt es sich bei der Neutralisation um die Reaktion zwischen einer Säure und einer Base. Dabei definiert sich eine Säure als eine Substanz, die unter Bildung von Hydronium-Ionen bzw. Oxonium-Ionen (H₃O⁺) in wässriger Lösung dissoziieren und Protonen abgeben kann. Im Gegensatz dazu beschreibt eine Base eine Substanz, die bei der Dissoziation in wässriger Lösung Hydroxid-Ionen (OH⁻) bildet und Protonen aufnehmen kann (vgl. MORTIMER, Charles E.; MÜLLER, Ulrich: Chemie - Das Basiswissen der Chemie. 8. Auflage, 2001, S. 234 und 282).

In dem beschriebenen Zusammenhang ist für den Laborbetrieb das diskontinuierlich Verfahren der Titration zur Ermittlung eines Graphs zur Darstellung des pH-Wertes bekannt. Dabei werden zu einer definierten Menge einer Säure schrittweise Kleinstmengen der Base zugeführt und der pH-Wert über einen Indikator bestimmt (vgl. MORTIMER, Charles E.; MÜLLER, Ulrich: Chemie - Das Basiswissen der Chemie. 8. Auflage, 2001, S. 311 f.).

Aus der WO2008083997A1 ist ein kontinuierliches Verfahren zur Neutralisation einer Salzsäurehaltigen Reaktionsmischung im Anschluss an die Produktion von Diphenylmethandiamin (MDA) bekannt geworden, bei dem die Neutralisation der Säure mit Ammoniak erfolgt und anschließend eine Trennung des Reaktionsgemisches in wässrige und organische Phase erfolgt. Dabei ist über einen weiteren Verfahrensschritt die Abtrennung des Ammoniaks aus der wässrigen Phase mittels eines Oxid oder Hydroxid eines Erdalkalimetalls möglich. Als wesentliche Unterschiede zum Verfahren der vorliegenden Erfindung kann herausgestellt werden, dass bei dem Verfahren WO2008083997A1 die schwache Base Ammoniak (pH-Wert von 9,4) als Neutralisationsmittel zu einer sauren Reaktionsmischung nach erfolgter MDA Reaktion zugegeben wird und nach der Neutralisationsreaktion eine Trennung der organischen von der wässrigen Phase erfolgt, um beide Phasen separat aufzuarbeiten bzw. einen Teil der eingesetzten Ammoniakmenge mittels Reaktion mit Kalkmilch und anschließender Destillation zurückzugewinnen.

Eine weitere verfahrenstechnische Anwendung der Neutralisation im industriellen Maßstab findet beispielweise in der Aufbereitung von kommunalen oder prozesstechnischen Abwässern, die bevorzugt als saure Mischabwässer anfallen, statt. Vor der Einleitung der gereinigten Abwässer in den Vorfluter wird ein pH-neutraler Zustand (pH 7) angestrebt, der mittels Zugabe starker Säuren und Basen (meist Schwefelsäure und Natronlauge oder alternativ Kalkmilch) zwischen Rechenanlage und der Vorklärung erreicht wird. Zusätzlich dient die Zugabe dieser Substanzen der Fällung von Metall-Ionen durch die Bildung von Metallhydroxiden. Dieser Vorgang wird als Neutralisationsfällung bezeichnet und findet in der Regel in Durchlaufbehandlungsanlagen statt. Dabei werden mittlere Verweilzeiten von 15 Minuten bei einem mittleren Durchsatz von 10 m³/h angestrebt und die Durchmischung erfolgt mittels langsam laufender Mischorgane. Jedoch steht der Fokus hierbei auf dem Trennen von Metallhydroxiden durch Sinkprozesse, sodass nachgeschaltete Abscheidungsprozesse erforderlich sind (vgl. HARTINGER, Ludwig: Handbuch der Abwasser- und Recyclingtechnik. 2. Auflage, 1991, S. 294 ff.).

Grundsätze der Prozessauslegung und Regelungstechnik sind in der Literatur zugänglich (vgl. LIPTAK, Bela G.: Instrument Engineers Handbook. 4. Auflage, 2005, S. 2044 ff.). Zu der konkreten Aufgabenstellung liest man hieraus jedoch nichts.

Keine der bekannten technischen Anwendungen fokussiert sich auf die Neutralisation der starken Säure Salzsäure mit der starken Base Natronlauge und die dabei entstehenden Verfahrens- und regelungstechnischen Herausforderungen der pH-Wert Einstellung bei hohen Stoffmengen (insbesondere einem Volumenstrom der Salzsäure von mindestens 1 m³/h) insbesondere bei variabler Salzsäureeingangskonzentration und variablem Salzsäureeingangsstrom sowie insbesondere auch bei der Abführung der Reaktionswärme bei einer kontinuierlichen und vollautomatisierten Betriebsweise.

Gegenstand der Erfindung ist ein Verfahren zur flexiblen Steuerung der Verwendung von Salzsäure mit einer HCl-Konzentration von mindestens 10 Gew.-%, insbesondere mit einem Volumenstrom von mindestens 1 m³/h, erhalten aus einem kontinuierlichen chemischen Produktionsverfahren, das dadurch gekennzeichnet ist, dass gereinigte Salzsäure aus einem Salzsäurelager wahlweise einer Versandstation, einer HCl-Elektrolyse-Station oder einer Chloralkali-Elektrolyse-Station, welche Abnahmestellen für die Salzsäure sind, oder einer Neutralisationsstation zugeführt wird, indem bei Ausfall einer oder mehrerer der vorgenannten Abnahmestellen oder bei Abnahmeengpässen der Abnahmestellen die Salzsäure der Neutralisationsstation zugeführt und mit konzentrierter Alkalilauge, insbesondere mit konzentrierter Natronlauge, neutralisiert wird und die dabei entstehende Salzlösung wahlweise der Chloralkali-Elektrolyse-Station oder einer Entsorgungsstation zugeführt wird.

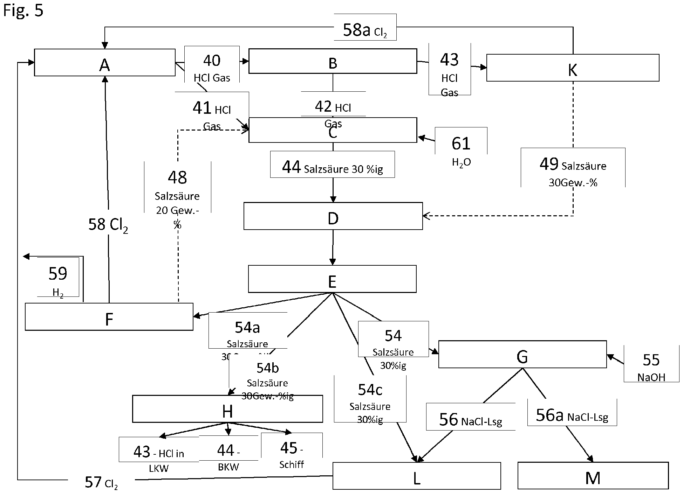

Das Verfahrensprinzip wird nachstehend beispielhaft anhand der Übersicht in Fig. 5 beschrieben.

In einer chemischen Produktion A entsteht Chlorwasserstoffgas welches wahlweise erst einer HCl-Reinigung B zugeführt oder direkt in einer HCl-Absorption C mit Wasser zu Salzsäure 44 umgesetzt wird. Der Chlorwasserstoff 42, 43 aus der Reinigung B kann der HCl-Absorption C oder der HCl-Gasphasenoxidation K zugeführt werden.

Die HCl-Gasreinigung B kann bevorzugt durch Kondensation des Chlorwasserstoffes bei niedriger Temperatur und/oder hohem Druck gefolgt von einer destillativen Reinigung erfolgen oder die Reinigung erfolgt durch Ausfrieren der Verunreinigungen. Die erhaltene gereinigte HCl-Fraktion kann nachträglich über A-Kohle weiter gereinigt werden.

Erfolgt eine HCl-Absorption des Chlorwasserstoffes in Wasser in einer Absorptionseinheit C, so kann die dabei frei werdende Energie dazu benutzt werden, Dampf innerhalb der Absorptionseinheit C zu erzeugen und mit diesem Dampf Verunreinigungen aus der Salzsäure zu entfernen. Zusätzlich kann Dampf der Einheit zum Herausstrippen von Verunreinigungen zugeführt werden. Aus der Absorptionseinheit wird eine Salzsäure 44 mit einem HCl-Gehalt von bevorzugt 30 Gew.% entnommen.

Die Absorption C erfolgt vorzugsweise in nur einem Apparat. Alternativ lassen sich auch andere Absorptionsverfahren gemäß dem Stand der Technik einsetzen. Hierzu wird beispielhaft in einer Kolonne im Sumpf Dampf eingespeist. Der zu absorbierende Chlorwasserstoff wird im Mittelteil der Kolonne aufgegeben und die Absorptionslösung, eine Salzsäure 48 mit einer Konzentration von 1 - 25 Gew.%, vorzugsweise 15 - 25 Gew.%ige Salzsäure, oben in der Kolonne aufgegeben. Die aufgegebene Salzsäure 48 kann vollständig oder zum Teil aus einer niedrigkonzentrierten Salzsäure stammen, die der HCl-Elektrolyse (F) z. B. nach dem Diaphragma-Verfahren oder dem HCl-SVK-Verfahren entnommen wurde. Der Absorptionsprozess wird insbesondere adiabat geführt. Am oberen Kolonnenteil der Absorptionskolonne der Absorption C können Verunreinigungen wie z.B.

Lösungsmittel oder organische Verunreinigungen oder, wenn es sich bei dem chemischen Prozess um eine Isocyanat-Produktion handelt, auch Reste von Phosgen entnommen werden. Der Kolonne wird eine 26-36 Gew.-%ige Salzsäure 44 entnommen, vorzugsweise eine 30 Gew.%ige Salzsäure und ggf. der Salzsäurereinigung D zugeführt.

Die erhaltene Salzsäure 44 kann in der der Salzsäurereinigung D beispielsweise mit A-Kohle gereinigt werden. Alternative Reinigungsverfahren wie Destillation, Strippung mit Dampf, Extraktion oder Behandlung mit anderen Adsorptionsmitteln sind ebenfalls möglich. Der Gehalt an organischen Verunreinigungen für den weiteren Einsatz z.B. in der Elektrolyse, sowohl der Salzsäure- als auch der NaCl-Elektrolyse, sollte gemessen am TOC-Gehalt (total organic carbon) von weniger als 100 mg/kg, vorzugsweise weniger als 10 mg/kg betragen. Auch für andere Anwendungen der Salzsäure muss diese üblicherweise in gereinigter Form vorliegen.

Die erhaltene Salzsäure aus der Reinigung D kann einem Lager E zugeführt werden. Das Salzsäurelager E kann dabei als Verteilerpunkt fungieren, wobei dies nicht ausschließlich so sein muss. Es ist ebenfalls denkbar, dass die Aufnahmestellen Salzsäure-Elektrolyse F, NaCl-Elektrolyse L oder auch andere Salzsäure-Verbraucher am Standort (nicht gezeichnet), die Salzsäure direkt beziehen. Vorzugsweise wird jedoch ein Puffer in Form eines Lagers E zwischengeschaltet.

Eine der Abnahmestellen für Salzsäure ist beispielhaft die Salzsäure-Elektrolyse F. Die Salzsäure-Elektrolyse F kann nach dem Diaphragma- oder dem Salzsäure-SVK-Verfahren gemäß dem Stand der Technik durchgeführt werden. Die installierte Elektrolysekapazität bestimmt dabei die Aufnahmemenge an Salzsäure. Salzsäure, die nicht mittels Elektrolyse zu Chlor 58 und ggf. Wasserstoff 59 recycelt werden kann, muss im Lager E gelagert werden. Das aus der Salzsäure-Elektrolyse stammende Chlor 58 und ggf. der Wasserstoff 59 werden ganz oder teilweise dem Produktionsverfahren A wieder zugeführt. Die abgereicherte Salzsäure 48 aus der Salzsäure-Elektrolyse F wird der HCl-Absorptionseinheit C wieder zugeführt und umgesetzt wie zuvor beschrieben.

Als chemische Produktionsverfahren die im neuen Verfahren Anwendung finden können werden insbesondere ein Produktionsverfahren zur Chlorierung von organischen Verbindungen (z.B. Herstellung von Vinylchlorid), ein Verfahren zur Phosgenherstellung und Phosgenierung z.B. zur Herstellung von Isocyanaten, insbesondere bevorzugt von Methylendiisocyanat (MDI), Toluol diisocyanat (TDI) oder ein Verfahren zur Herstellung von Polycarbonat (PC), oder ein Verfahren zur Verbrennung chlorhaltiger Abfälle verstanden.

Grundsätzlich ist das neue Verfahren jedoch anwendbar in allen Fällen chemischer Produktion bei der in großen industriellen Mengen Chlorwasserstoff bzw. Salzsäure als Nebenprodukt anfällt.

Ein bevorzugtes Verfahren ist daher dadurch gekennzeichnet, dass in der HCl-Elektrolyse-Station Salzsäure zu Chlor umgesetzt wird, wobei das Chlor in das chemische Produktionsverfahren recycliert und dort chemisch umgesetzt wird.

Eine weitere Abnahmestelle für die Salzsäure aus dem Lager E kann die NaCl-Elektrolyse L (Strom 54c) oder auch die Neutralisation G (Strom 54) oder die Versandstation H (Strom 54b) sein.

Üblicherweise beträgt die Kapazität einer chemischen Großproduktion, z.B. von einem Isocyanat mehr als 50.000 t/a je Anlage, wobei Anlagenkapazitäten von bis zu 400.000 t/a an einem Standort durchaus üblich sind. Dabei werden Chlorwasserstoffströme erzeugt, die über 4 t/h betragen. Befindet sich am Standort eine Chlor-Alkali-Elektrolyse L, so kann ein Teilstrom der gereinigten Salzsäure zum Ansäuern der Sole oder zur Natriumhypochlorit-Zersetzung eingesetzt werden. Die Mengen für diese Anwendung sind jedoch gering. So hat eine Chlor-Alkali-Elektrolyse mit einer Kapazität von 400.000 t/a Chlor einen Salzsäurebedarf von ca. 0,9 t/h bis 1,4 t/h HCl 100%. Bei einer Toluoldiisocyanat (TDI) - Anlage mit einer Kapazität von 100.000 t/a TDI fallen ca. 231 t/h HCl 100% an, so dass nur ca. 0,5% der HCl Menge in der Chlor-Alkali-Elektrolyse zur Ansäuerung des Elektrolyten eingesetzt werden können.

Wird die Salzsäure in der NaCl-Elektrolyse eingesetzt, so wird diese auch dort zu Chlor recycelt und kann damit in das Produktionsverfahren A zurückgeführt werden. Hierdurch werden die Wertstoffkreisläufe immer weiter geschlossen, wodurch das Produktionsverfahren A emissionsärmer produzieren kann.

Bevorzugt ist daher auch eine Variante des neuen Verfahrens, die dadurch gekennzeichnet, dass in der Chloralkali-Elektrolyse-Station L Alkalichlorid, insbesondere Natriumchlorid, das ggf. erhalten ist aus der Neutralisation G, und nicht neutralisierte Salzsäure zum Ansäuern der Alkalichloridlösung zu Chlor umgesetzt wird, wobei das Chlor in das chemische Produktionsverfahren A recycliert und dort chemisch umgesetzt wird.

Bevorzugt wird die gereinigte Salzsäure dem Verkauf über die Versandstation H oder der NaCl-Elektrolyse L oder ggf. auch anderen Salzsäure-Nutzern (nicht gezeichnet) am Standort zugeführt. Weitere Reyclingverfahren sind die Salzsäure-Elektrolyse F und das Deacon-Verfahren K.

Aus dem Lager E kann Salzsäure entnommen werden, um diese in verschiedenen Anwendungen einzusetzen. So kann die Salzsäure in einer Salzsäure-Elektrolyse F z. B.: nach dem Diaphragmaverfahren oder nach dem HCl-SVK Verfahren zu Chlor und Wasserstoff bzw. Chlor und Wasser umgesetzt werden. Ist die Kapazität der Elektrolyse F beschränkt, muss ein Teil der gereinigte Salzsäure aus einem Salzsäurelager einer Versandstation H zugeführt werden. Hier kann die Verladung auf LKW 43, Bahnkesselwagen 44 oder auf ein Schiff 45 erfolgen. Weitere Absatzmöglichkeit für die Salzsäure aus dem Lager wäre der Einsatz in einer ChloralkaliElektrolyse L. Stehen die vorgenannten Absatzwege nicht mehr zur Verfügung oder ist deren Kapazität erschöpft, so wird die Salzsäure aus dem Lager E gemäß der bevorzugten Ausführung der Erfindung einer Neutralisationsstation G zugeführt, bei der die Salzsäure mit Natronlauge zu einer - vorzugsweise gesättigten - Kochsalzlösung umgesetzt wird. Diese Kochsalzlösung 56 wird dabei vorzugsweise wieder in einer Chlor-Alkali-Elektrolyse L eingesetzt oder muss über eine Entsorgungsstation M 56a entsorgt werden

Ein Teilstrom oder auch der Gesamtstrom des in der Reinigungsstation B gereinigten Chlorwasserstoffs 43 kann der katalytischen Oxidation mit Sauerstoff, der HCl Gasphasenoxidation nach dem Deacon-Verfahren K zugeführt werden. Dabei entsteht Chlor 58a und aus nicht umgesetztem Chlorwasserstoff eine 20 - 36%ige Salzsäure 49, bevorzugt eine 30 Gew.-%ige Salzsäure.

Das Chlor 58a aus der HCl Gasphasenoxidation K wird der chemischen Produktion A teilweise oder ganz wieder zugeführt. Die Salzsäure 49 kann je nach ihrer Qualität der Salzsäurereinigung D oder direkt dem Salzsäurelager E und bedarfsweise der Neutralisation G und / oder der NaCl-Elektrolyse L und / oder einer HCl-Elektrolyse F und /oder einer Versandstation H zugeführt werden.

Die Verknüpfung der HCl-Gasphasenoxidation K mit der weiteren Nutzung verschiedener Salzsäure Verwertungen, insbesondere der Salzsäure-Elektrolyse F stellt eine sehr effiziente Variante der HCl-Gasphasenoxidation K dar. Diese Verknüpfung ist besonders effizient, da aus der HCl-Gasphasenoxidation anfallende Salzsäure nur mit extrem hohen Aufwand HCl-Gas gewonnen werden kann, so dass die sinnvolle Verwertung dieser Salzsäure geboten ist.

Bevorzugt wird in dem neuen Verfahren ein mehrstufiges, insbesondere ein dreistufiges Neutralisationsverfahren in der Neutralisationsstation G angewendet.

Eine für das neue Verfahren bevorzugte Art der mehrstufigen Neutralisation wird in den folgenden Abschnitten beschrieben.

Spezielle Aufgabe der Erfindung ist es für die flexible Steuerung der Verwendung von Salzsäure aus chemischer Produktion in großen Mengen ein kontinuierliches Neutralisationsverfahrens bereitzustellen, das im industriellen Maßstab den variablen Betriebsanforderungen bezüglich Eingangskonzentration und -menge der Salzsäure in einem kontinuierlich arbeitenden und vollautomatisierten Neutralisationsprozess mit Natronlauge bei Einhaltung der Zielprozessgrößen pH-Wert und Temperatur gerecht wird. Dabei besteht eine besondere Aufgabe in der Regelung pH-Wertes, welcher sich in einer logarithmischen Abhängigkeit zur Konzentration an Hydroniumionen in der wässrigen Lösung entwickelt. Zudem besteht die weitere besondere technische Aufgabe darin, prozessbedingte Druckschwankungen in den der Neutralisation vorgelagerten Verfahrensschritten und damit verbundene Massendurchflussschwankungen in einem bestimmten Toleranzfenster automatisch auszugleichen.

Die besondere Aufgabe wird dadurch gelöst, dass die Neutralisation von Salzsäure mit einem Volumenstrom von mindestens 1 m³/h mit Alkalilauge in mindestens 3 Reaktionsstufen durchgeführt wird, die eine Grobeinstellung, Feineinstellung und Endeinstellung des pH Wertes beinhalten und von Stufe zu Stufe jeweils gekühlte zurückgeführte Teilströme der Reaktionsmischung beinhalten, die in diesen Stufen die jeweilige Reaktionswärme aufnehmen. Wobei zur Sicherstellung des gewünschten pH-Wertes am Ende die Homogenisierung der Lösung der Ausgangstoffe sowie deren dem Prozessablauf folgenden unterschiedlichen Reaktionsmischungen sicherzustellen ist.

Insbesondere findet zur Realisierung des Ziel-pH-Wertes ein Konzept aus drei Reaktionsstufen Anwendung, welches die Dosierung der benötigen Neutralisationsmengen unter Berücksichtigung des maximalen pH-Sprungs einer Reaktionsstufe erlaubt und den maximal einsetzbaren Konzentrationen der Edukte Rechnung trägt. Mit dieser Dreistufigkeit ist es möglich, den Anforderungen an die Dosiermengen basierend auf der benötigen Restmenge an Neutralisationsmittel zum Ziel-pH-Wert gerecht zu werden. Entsprechend nimmt die Dosierkapazität mit steigender Reaktionsstufenzahl ab. Die absteigenden Dosierkapazität spiegelt sich in der Wahl der Dosierventile wieder.

Bevorzugt ist ein Verfahren bei dem die Neutralisation G in Form einer mehrstufigen, insbesondere einer dreistufigen kontinuierlichen Neutralisation von Salzsäure mit einer HCl-Konzentration von mindestens 10 Gew.-% und mit einem Volumenstrom von mindestens 1 m³/h, bevorzugt mindestens 5 m³/h, auf einen Ziel pH-Wert im Bereich von 3 bis 9, durchgeführt wird mit den folgenden Schritten:
A) Zuführen der zu neutralisierenden Salzsäure 4 und einem Anteil von mindestens 95%, bevorzugt mindestens 99% der stöchiometrisch benötigten Alkalilauge 5 in einer ersten Stufe 1 in einen Volumenstrom 9 neutralisierter Salzsäure, der gekühlt aus einer zweiten Stufe 2 zurückgeführt wird, anschließend Mischen der Stoffströme 4, 5, 9 und Ausreagieren der primären Reaktionsmischung 18a in einer Neutralisations- und Verweilzone 17a, wobei der pH Wert des aus der ersten Stufe 1 ablaufenden Stromes 6 mindestens pH 1 aufweist, wobei der Volumenstrom 9 der aus der zweiten Stufe 2 gekühlt zurückgeführt wird, wenigstens dem 3-fachen des Salzsäure-Volumenstromes entspricht, der in die erste Stufe 1 zugeführt wird,
B) Überführen des Volumenstroms 6 aus der ersten Stufe 1 in eine Neutralisationszone 17b der zweiten Neutralisationsstufe 2, weiteres Einstellen des pH Wertes der sekundären Reaktionsmischung 18b auf einen Wert von bevorzugt pH 3 mittels Zugabe von Alkalilauge 5' oder Salzsäure 4' an den Dosierstellen 7" und 7''' in einem Nebenkreislauf 7', wobei dieser Nebenkreislauf 7')aus der Entnahme eines Teilstroms aus dem zu kühlenden Hauptstrom 7 der zweiten Reaktionsstufe 2 resultiert, wobei das Verhältnis des Volumenstroms 7 der neutralisierten Salzsäure zum Volumenstrom des Teilstroms 7' wenigstens 10 zu 1 beträgt und, nach erfolgter Kühlung 8 des Hauptstromes der zweiten Stufe, Rückführung eines weiteren größeren Teilstroms 9 der Sekundären Reaktionsmischung 18b der zweiten Stufe 2 in die erste Neutralisationsstufe 1 zur Durchführung der Reaktion A),
C) Zuführen eines weiteren Teilstroms 10 aus der sekundären Reaktionsmischung 18b der zweiten Stufe 2 in eine Neutralisationszone 17c einer dritten Neutralisationsstufe 3, weiteres Einstellen des pH Wertes der tertiären Reaktionsmischung 18c in der dritten Neutralisationsstufe 3 auf einen pH-Wert im Bereich von pH 3 bis pH 9 mittels Zugabe von Alkalilauge 5' oder Salzsäure 4' insbesondere an den Dosierstellen 11" und 11''' in einem weiteren Nebenkreislauf 11', der der Neutralisationszone 17c angeschlossen ist, wobei dieser Nebenkreislauf 11' aus einem kleineren Teilstrom des aus der dritten Stufe austretenden Hauptstroms 11 der Reaktionsmischung 17c besteht, welcher einer Kühlung 12 zugeführt wird und wobei der größere Teilstrom 13 des aus der dritten Stufe austretenden Hauptstroms 11 nach erfolgter Kühlung 12 einer finalen Qualitätskontrolle auf Temperatur- und pH-Wert-Überwachung zugeführt wird und im Falle, dass dieser gekühlte Strom 13 der Tertiären Reaktionsmischung 18c vorgegebene Qualitätskriterien erfüllt, dieser Strom 13 als Produktstrom 15 entnommen wird, oder andernfalls die tertiäre Reaktionsmischung 18c in die dritte Stufe 3 als Rückführstrom 16 zur weiteren pH-Wert Einstellung einzuleiten ist.

In einer bevorzugten Ausführung des neuen Verfahrens wird in der Neutralisation G als Neutralisationsmittel (Alkalilauge) Natronlauge verwendet. Bevorzugt wird als Neutralisationsmittel Natronlauge mit einem Gehalt von NaOCl von weniger als 100 ppm verwendet.

Das neue Verfahren wird vorzugsweise so ausgeführt, dass in der Neutralisation G die mittlere Verweilzeit der Reaktionsmischung 18a in der ersten Neutralisationsstufe 1 von 20s bis 3 min beträgt.

Die mittlere Verweilzeit der Sekundären Reaktionsmischung 18b in der zweiten Neutralisationsstufe 2 in der Neutralisation G beträgt in einer weiteren bevorzugten Ausführung des Verfahrens von 15 bis 100 min.

Die mittlere Verweilzeit der Tertiären Reaktionsmischung 18c in der dritten Neutralisationsstufe 3 in der Neutralisation G beträgt in einer anderen bevorzugten Ausführung des neuen Verfahrens von 45 bis 250 min.

Eine besonders bevorzugte Variante des neuen Neutralisationsverfahrens G ist dadurch gekennzeichnet, dass unabhängig voneinander die Temperatur der primären Reaktionsmischung 18a am Auslauf der ersten Stufe 1 auf einen Wert im Bereich von 45 °C bis 80°C bevorzugt von 65 °C bis 70°C eingestellt wird, die Temperatur der sekundären Reaktionsmischung 18b, welche direkt in der zweiten Reaktionsstufe 2 gemessen wird, auf einen Wert im Bereich von 40 °C bis 75°C bevorzugt von 60°C bis 65°C eingestellt wird und die Temperatur der tertiären Reaktionsmischung 18c am Auslauf der Kühlung der dritten Stufe 12 auf einen Wert im Bereich von 15 °C bis 55°C bevorzugt von 25 °C bis 50°C eingestellt wird. Dabei beträgt die Zieltemperatur der tertiären Reaktionsmischung 18c im Produktstrom 15 beim Verlassen der Anlage besonders bevorzugt maximal 30°C.

In einer bevorzugten Ausführung der Erfindung kommt in der Neutralisation G eine bestimmte Anordnung aus statischem Mischer und Mischdüsen zum Einsatz. In der ersten Reaktionsstufe werden dafür beide Eingangsströme in einem Statikmischer vereint, um anschließend in vergleichsweise kurzer Zeit eine homogene Reaktionsmischung zu erhalten.

Eine weitere besonders bevorzugte Ausführung der der Neutralisation G ist daher dadurch gekennzeichnet, dass das Mischen der Stoffströme 4, 5, 9 in der ersten Neutralisationsstufe 1 in einem statischen Mischer erfolgt, wobei der statische Mischer eine Mischgüte von mindestens 98% bevorzugt 99% aufweist.

Unter dem Qualitätsmerkmal Mischgüte wird hier das Verhältnis des Volumens mit homogener Verteilung an Natronlauge, Salzsäure sowie deren Reaktionsprodukt zu dem Gesamtvolumen verstanden. In diesem Zusammenhang ist das Ziel der Homogenität, dass jede Probe eine Zusammensetzung widerspiegelt, die der Grundgesamtheit entspricht. Die Mischgüte stellt sich in Abhängigkeit des Volumenstroms und des daraus resultierenden Druckverlustes an den Mischelementen, welche eine Querdurchmischung aufgrund der Turbulenz im Mischrohr erzeugen, ein und wird in einem Abstand von 4 x Rohrdurchmesser nach jenem Mischelement bestimmt. Dabei wird die Strecke hinter dem Kontaktpunkt der zu mischenden Fluide bis zum Erreichen der Mischgüte als Mischstrecke bezeichnet.

In einer besonderen Ausführung der Neutralisation G folgt dem Statikmischer ein nachgeschalteter Behälter, der aufgrund seines Volumens eine Verweilzeit 17a zum Ausreagieren der Reaktionsmischung der ersten Stufe 18a bewirkt. Damit wird der Effekt der Homogenisierung der Reaktionsmischung weiter verstärkt. Dies ist zudem förderlich um eine verlässliche pH-Messung für die Reaktionsmischung 18a durchführen zu können.

In beiden weiteren Stufen B) und C) (2. und 3. Reaktionsstufe) in der Neutralisation G sind insbesondere Mischdüsen vorgesehen, um einerseits die einströmenden Massenströme zu mischen und andererseits eine Homogenisierung innerhalb der Reaktionsbehälter herbeizuführen.

Eine bevorzugte Variante der Neutralisation G ist dadurch gekennzeichnet, dass in der Neutralisationszone 17b und/oder in der Neutralisationszone 17c jeweils ein Puffervolumen im Bereich von ca. 25 % des nutzbaren Behältervolumens zur Kompensation von Schwankungen des Eingangsvolumenstroms vorgesehen ist.

Besonders bevorzugt wird die Neutralisation G so gestaltet, dass die Vermischung der Sekundären Reaktionsmischung 18b mit dem Teilstrom 4', 5', 7' und die Vermischung der Tertiären Reaktionsmischung 18c mit dem Teilstrom 4', 5', 11' unabhängig voneinander unter Verwendung von Rührwerkzeugen 19 in der Neutralisationszone 17b bzw. 17c oder über Mischdüsen 20 erfolgt, die im Eingangsbereich der Zuleitungen der Teilströme 7' bzw. 11' zu der Neutralisationszone 17b bzw. 17c vorgesehen sind.

In allen Stufen sind die Dosierventile für die Dosierung von Natronlauge insbesondere zweifach ausgeführt um einen möglichst exakte Mengendosierung vornehmen zu können. Dementsprechend existiert pro Neutralisationsstufe ein grobes Dosierorgan und ein kleines Ventil zur Feineinstellung. Für die Zugabe von Salzsäure ist diese zweifache Ausführung der Dosierorgane nicht unbedingt notwendig, wenn insbesondere in der ersten Stufe ein Sollwert vorgegeben wird und in den anderen Stufen lediglich einem Überschwingen des pH-Wert entgegengewirkt wird und keine konkrete Regelaufgabe vorliegt.

Weiterhin ist es hilfreich in einer bevorzugten Ausführung der Neutralisation G eine bestimmte Verweilzeit für die Reaktion von Natronlauge und Salzsäure zu gewährleisten. Dafür sind entsprechende Verweilzeiten in den Reaktionsstufen vorgesehen. Da der bevorzugt einzusetzende Statikmischer in der ersten Stufe kaum Verweilzeiten erzeugt, wird ein Verweilzeitbehälter im Statikmischer nachgeschaltet. Dies ermöglicht der Reaktionsmischung auszureagieren und steigert die Aussagekraft der pH-Messung nach der ersten Stufe. Die gleichen technische Notwendigkeit spricht für die Ermöglichung entsprechender Verweilzeiten in der zweiten und dritten Stufe, die jedoch im Gegensatz zu ersten Stufe insbesondere über integrierte Reaktionsbehältervolumen realisiert wurden. Dies hat zusätzlich den Vorteil einer Pufferfähigkeit des Systems bei Störungen der Prozessgrößen der Eingangsströme und verhindert damit das direkte Abschalten der Anlage bei Verlassen dieser Prozessfenster. Die Volumina des zweiten und dritten Reaktionsbehälters wurden in einer bevorzugten Ausführung so ausgewählt, dass ein Aufschaukeln der pH-Regelungen vermieden wird (Resonanzkatastrophe).

Die gesamte Anlage zur Durchführung der Neutralisation G ist insbesondere als Durchlaufanlage ausgeführt und ist für einen kontinuierlichen Betrieb ohne Notwendigkeit der Durchflussunterbrechung aufgrund von Reaktions- oder Rüstzeiten ausgelegt. Damit kann eine durchgehende Verarbeitung von Salzsäure gewährleistet werden und Lasteinschränkungen oder - schwankungen vorgelagerter Prozesse sind nicht zu befürchten.

Die bei der Neutralisationsreaktion entstehende Wärme wird insbesondere mittels Kühlwasserkühler über separate Kreisläufe in der zweiten und dritten Reaktionsstufe schrittweise abgeführt. Dabei wird in der zweiten Stufe ein Teilstrom zu Kühlzwecken auch vor die erste Stufe zurückgeführt. Für den Transport der Reaktionsmischung zu den Wärmetauschern kommen typischerweise Umwälzpumpen zum Einsatz, die zusätzlich zu einem Vermischungseffekt einerseits innerhalb des Aggregates (durch Rotation des Laufrades) und andererseits durch die Rückführung auf die Behälter führen. Mit diesen Maßnahmen wird insbesondere sichergestellt, dass werkstofftechnische Grenzen eingehalten werden und das produzierte neutralisierte Abwasser innerhalb der jeweils vorgegebenen spezifizierten Anforderungen liegt und damit für weitere Prozesse genutzt werden kann.

In dem neuen Verfahren wird in einer bevorzugten Ausführung der Neutralisation G Alkalilauge, insbesondere Natronlauge mit einem Gehalt von NaOCl von weniger als 100 ppm eingesetzt, damit sich keine Bildung von freiem Chlor während der Reaktion einstellt, welches wiederrum den Einsatz eines Reduktionsmittels erfordern würde. Die Konzentration der Natronlauge beträgt bevorzugt mindestens 15 Gew.-%, besonders bevorzugt mindestens 25 Gew.-%, ganz besonders bevorzugt mindestens 30 Gew.-%.

Im Bedarfsfall wird die in der Neutralisation G eingesetzte Alkalilauge, bevorzugt Natronlauge, vor dem Einsatz mit einem Reduktionsmittel, vorzugsweise Natriumbisulfit versetzt um den vorgenannten Höchstgehalt von NaOCl einzustellen. Alternativ kann das Reduktionsmittel auch in der zweiten Neutralisationsstufe der Neutralisation G dem Strom der Alkalilauge, insbesondere der Natronlauge zugesetzt werden.

Die Erfindung wird nachfolgend anhand der Figuren durch die Beispiele, welche jedoch keine Beschränkung der Erfindung darstellen, näher erläutert.

Es zeigen:
- Fig. 1: eine schematische Ansicht einer dreistufigen Neutralisation G von Salzsäure

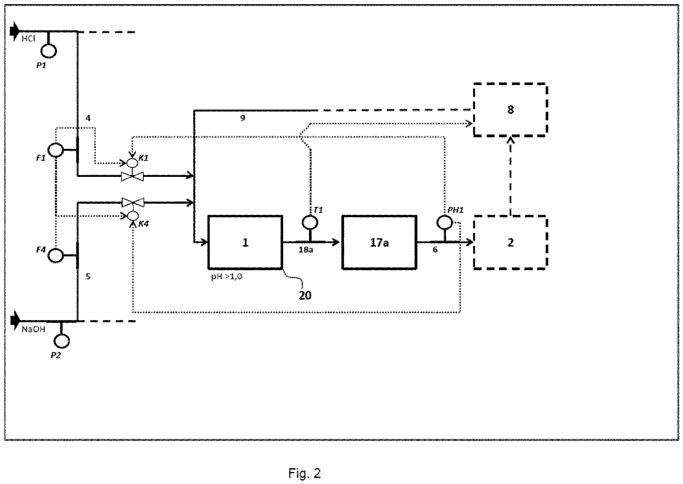

- Fig. 2: schematische Ansicht zu Details der erste Neutralisationsstufe

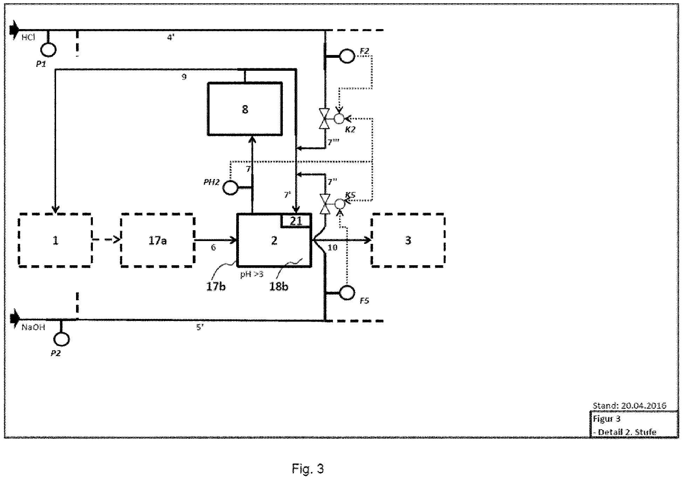

- Fig. 3: schematische Ansicht zu Details der zweiten Neutralisationsstufe

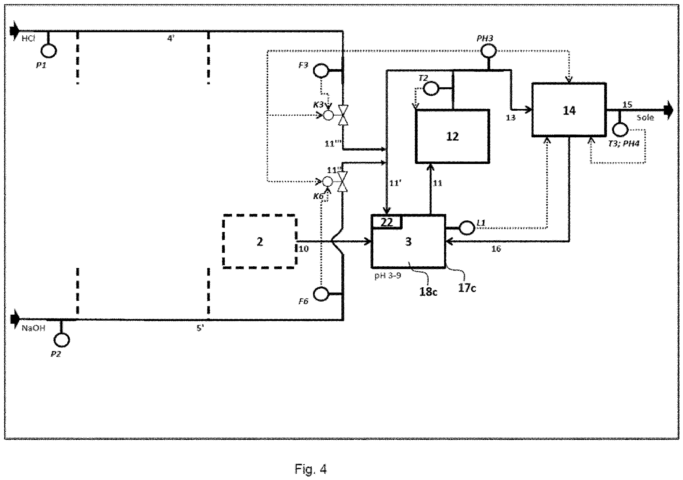

- Fig. 4: schematische Ansicht zu Details der dritten Neutralisationsstufe
- Fig. 5: eine schematische Ansicht des Gesamtverfahrens zum Salzsäure-Management
- Fig. 6: eine schematische Ansicht einer besondere Ausführung zum Salzsäure-Management

In den Figuren haben die Bezugszeichen die nachstehende Bedeutung:
- 1: erste Neutralisationsstufe
- 2: zweite Neutralisationsstufe
- 3: dritte Neutralisationsstufe
- 4: zu neutralisierende Salzsäure
- 4': Salzsäurestrom zur Einstellung des Ziel-pH-Wertes in 2. und 3. Stufe
- 5: Natronlauge
- 5': Natronlaugestrom zur Einstellung des Ziel-pH-Wertes in 2. und 3. Stufe
- 6: aus der ersten Stufe austretende Reaktionsmischung
- 7: Hauptstrom aus der zweiten Neutralisationsstufe
- 7': kleinerer Nebenkreislauf an teilneutralisierter Salzsäure vom Hauptstrom 7
- 7": Dosierung Natronlauge in Nebenkreislauf der zweiten Neutralisationsstufe
- 7''': Dosierung Salzsäure in Nebenkreislauf der zweiten Neutralisationsstufe
- 8: Kühlung der ersten und zweiten Neutralisationsstufe
- 9: Rückführung gekühlter Reaktionsmischung der zweiten Stufe
- 10: aus der zweiten Stufe austretende Reaktionsmischung
- 11: aus der dritten Stufe austretende Reaktionsmischung
- 11': kleinerer Nebenkreislauf an neutralisierter Salzsäure von Strom 11
- 11'': Dosierung Natronlauge in Nebenkreislauf der dritten Neutralisationsstufe
- 11''': Dosierung Salzsäure in Nebenkreislauf der dritten Neutralisationsstufe
- 12: Kühlung der dritten Neutralisationsstufe
- 13: gekühlte Reaktionsmischung der dritten Stufe
- 14: Kontrolle der Abgabekriterien bzw. Qualität des Produktstromes
- 15: abgeführter Produktstrom der Neutralisation im Qualitätsfenster
- 16: rückgeführte Reaktionsmischung außerhalb des Qualitätsfensters
- 17a: Verweilzeit- und Neutralisationszone nach der ersten Stufe
- 17b: Neutralisationszone der zweiten Stufe
- 17c: Neutralisationszone der dritten Stufe
- 18a: (primäre) Reaktionsmischung der ersten Stufe
- 18b: (sekundäre) Reaktionsmischung der zweiten Stufe
- 18c: (tertiäre) Reaktionsmischung der dritten Stufe
- 20: Statikmischer der ersten Stufe
- 21: Mischdüsen der zweite Stufe
- 22: Mischdüsen der dritten Stufe
- F1: Durchflussmessung Salzsäure Zulauf erste Neutralisationsstufe
- F2: Durchflussmessung Salzsäure Zulauf zweite Neutralisationsstufe
- F3: Durchflussmessung Salzsäure Zulauf dritte Neutralisationsstufe
- F4: Durchflussmessung Natronlauge Zulauf erste Neutralisationsstufe
- F5: Durchflussmessung Natronlauge Zulauf zweite Neutralisationsstufe
- F6: Durchflussmessung Natronlauge Zulauf dritte Neutralisationsstufe
- K1: Regelorgan Salzsäure Zulauf erste Neutralisationsstufe
- K2: Regelorgan Salzsäure Zulauf zweite Neutralisationsstufe
- K3: Regelorgan Salzsäure Zulauf dritte Neutralisationsstufe
- K4: Regelventilpaar Natronlauge Zulauf erste Neutralisationsstufe
- K5: Regelventilpaar Natronlauge Zulauf zweite Neutralisationsstufe
- K6: Regelventilpaar Natronlauge Zulauf dritte Neutralisationsstufe
- P1: Eingangsdruckmessung Salzsäure
- P2: Eingangsdruckmessung Natronlauge
- PH1: pH-Messung nach erster Neutralisationsstufe für pH-Regelung
- PH2: pH-Messung nach zweiter Neutralisationsstufe für pH-Regelung
- PH3: pH-Messung nach dritte Neutralisationsstufe für pH-Regelung
- PH4: Kontrolle Ziel-pH-Wert
- T1: Temperaturmessung nach erster Neutralisationsstufe für Kühlwasserregelung
- T2: Temperaturmessung nach dritter Neutralisationsstufe für Kühlwasserregelung
- T3: Kontrolle Zieltemperatur
- A: Chemische Produktion (Isocyanatproduktion)
- E: Salzsäurelager
- F: HCl-Elektrolyse-Station
- G: Neutralisationsstation
- L: Chloralkali-Elektrolyse-Station
- M: Entsorgungsstation
- 40, 41: Chlorwasserstoff
- 42, 43: Chlorwasserstoff gereinigt
- 44, 49: Salzsäure, roh
- 48: Salzsäure, 20 Gew.-%
- 54, 54a, 54b, 54c: Salzsäure gereinigt
- 55: konz. Natronlauge
- 56, 56a: Salzlösung
- 57, 58: Chlor
- 59: Wasserstoffgas
- 60: Salzsäure, verunreinigt
- 61: Wasser

### Beispiele

Die folgenden Beispielen verdeutlichen das flexible Salzsäure-Management.

### Beispiel 1 Beschreibung einer mehrstufigen Neutralisation

Der Verbund für das Salzsäure-Management an einem Produktionsstandort ist schematisch in Fig. 5 dargestellt.

In einer chemischen Produktionsanlage A fällt HCl Gas an, das einer Station B zur Gasreinigung, insbesondere mittels Destillation, Ausfrieren von Verunreinigungen und Reinigung über Aktivkohle, zugeführt wird (Gasstrom 40). Das gereinigte Chlorwasserstoffgas 42 wird einer Station C zur Chlorwasserstoff-Absorption, die mittels Dampfstrippung arbeitet, zugeführt. Ein Teil des gereinigten Chlorwasserstoffgases 43 wird einer Anlage K zur katalytischen Gasphasenoxidation zugeführt, in der Chlorwasserstoff mit Sauerstoff in Gegenwart von Rutheniumverbindungen enthaltenden Katalysatoren bei erhöhter Temperatur zur Bildung von Chlor 58a und Wasser bzw. Salzsäure 49 umgesetzt wird. Das Chlorgas 58a wird der Produktion A zur Umsetzung zurückgeführt.

Wahlweise kann ein HCl-Gasstrom 41 auch direkt der Station C zur Chlorwasserstoff-Absorption zugeführt werden.

Salzsäure 44 aus der HCl-Absorption C und gegebenenfalls überschüssige Salzsäure 49 aus der HCl Gasphasenoxidation K werden einer Station D zur Reinigung von Salzsäure zugeführt, die weitere Verunreinigungen, beispielsweise mittels Aktivkohle entfernt. Die gereinigte Salzsäure wird einem Salzsäuretank E als Salzsäurelager weitergeleitet. Bei Überschreitung der Kapazität des Salzsäuretanks E wird Salzsäure 54 entweder aus dem Salzsäuretank E oder direkt aus der Station D zur Reinigung von Salzsäure der Neutralisationsstation G zugeleitet (nicht gezeichnet) und dort mittels konzentrierter Natronlauge 55 neutralisiert. Die dabei entstehende Salzlösung 56 kann vorzugsweise einer Anlage L zur Elektrolyse von Natriumchlorid oder in einem Strom 56a einer Entsorgungsstation M zugeführt werden. Bei der NaCl-Elektrolysestation L kann ein Teil der Salzsäure 54c aus dem Lager E zu Ansäuerung der Natriumchloridlösung verwendet werden. Das in der Elektrolyse L gebildete Chlor 57 wird der Wiederverwendung in der chemischen Produktion A zugeführt.

Eine weitere Abgabestation für die Salzsäure 54b ist die Versandstation H, in der die Verladung der Salzsäure wahlweise auf Lastkraftwagen (Strom 43), Bahnkesselwagen (Strom 44) oder auf Schiffe (Strom 45) erfolgt.

Im Produktionsstandort ist hier auch eine Salzsäure-Elektrolyse-Station F vorgesehen, in der ein Teil der gereinigten Salzsäure 54a aus dem Salzsäurelager E zu Chlorgas 58, gegebenenfalls Wasserstoff 59 und abgereicherter Salzsäure 48 umgesetzt wird. Das Chlorgas 58 wird bedarfsweise in die chemische Produktion A zurückgeführt, der Wasserstoff 59 thermisch oder anderweitig verwertet und die abgereicherte Salzsäure 48 der HCl-Absorption C zugeführt.

Die Neutralisationsstation G wird dann in Betrieb genommen, wenn die Kapazität des Salzsäurelagers E erschöpft, die anderen Recycling Möglichkeiten Salzsäure-Elektrolyse F, Natriumchlorid-Elektrolyse L und der Verkauf bzw. Versand H aus verschiedenen Gründen nicht möglich sind.

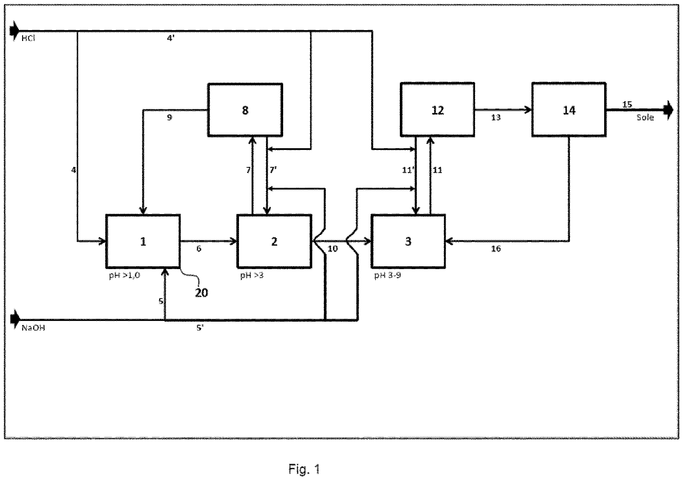

Nach dem Anfahren der Kühl- und Pumpenkreisläufe sowie der Aktivierung der Eduktversorgung ist die Neutralisationsanlage betriebsbereit (Fig. 1). Es liegen für die eingesetzte 32%ige Natronlauge an der Messstelle P2 ein Betriebsdruck von 6,3 bar / 0,63 MPa und für die zu neutralisieren 31%ige Salzsäure an der Messstelle P1 ein Betriebsdruck von 5,4 barü / 0,54 MPa an. Über den Betriebsmitarbeiter wird ein Sollwert für den zu neutralisierenden Salzsäurestrom im Prozessleitsystem vorgegeben. Ein Salzsäureeingangsstrom 4 mit einem Volumenstrom von 30,0 m³/h wird in den Rückführungsstrom gekühlter Reaktionsmischung der zweiten Stufe 9 eingeleitet. Über eine Verhältnisregelung F1 und F2 sowie über die pH-Regelung der ersten Stufe PH1 wird über das Regelventilpaar des Natronlaugezulaufes der erste Neutralisationsstufe K4 eine Menge von 28,5 m³/h dem Strom aus 9 und 4 zudosiert. Jener Gesamtvolumenstrom von 179 m³/h gelang anschließend in einen Statikmischer 20, welcher das Mischorgan der ersten Neutralisationsstufe 1 darstellt. Nach dem Durchlaufen einer intensiven Homogenisierung erfolgt nach dem Statikmischer die Messung der Temperatur T1 zur Regelung der Kühlwasserdurchflussmenge für die Kühlung der ersten und zweiten Stufe 8. Es stellt sich an dieser Stelle eine Temperatur von 65,4 °C ein. Anschließend gelangt die primäre Reaktionsmischung 18a in eine Verweilzeit- und Neutralisationszone 17a, die mittels eines durchströmten Behälters realisiert wurde und zum weiteren Ausreagieren jener Reaktionsmischung vorgesehen wurde, um anschließend eine verlässliche pH-Messung PH1 zur Regelung der zugeführten Natronlaugemenge 5 zu garantieren. In der austretenden Reaktionsmischung der ersten Stufe 6 stellt sich ein pH-Wert von 1,6 ein.

Im nächsten Schritt gelangt die noch saure Salzsole in die bei Umgebungsdruck betriebene, zweite Stufe der Neutralisationsanlage 2. Deren Verweilzeit wird durch einen drucklos betriebenen, hoch gesetzten Reaktionsbehälter (nicht gezeichnet) gewährleistet, indem sich über einen freien Überlauf im Normalbetrieb ein Füllstand von 58,3 % einstellt, die etwa 30 m³ entsprechen. Durch den Einbau der Mischdüsen 21 wird die entstehende Turbulenz in der Reaktionsstufe 2 für das Vermischen genutzt. Zudem saugen die Mischdüsen 21 einen etwa vierfachen Strom aus dem umgebenden Behältervolumen jene Reaktionsmischung 18b mit an. Zwei kleine Mischdüsen sind tangential zum Boden ausgerichtet und ein großer Jetmischer wirkt schräg nach oben zentral und sorgt so für die Durchmischung im Volumen. Diesen Mischprinzip kommt analog in der dritten Neutralisationsstufe 3 zur Anwendung. Aus dieser Stufe wird ein Hauptstrom 7 der Reaktionsmischung 18b entnommen und der Kühlung 8 zugeführt. Hier wird ein Großteil der Neutralisationswärme der ersten und zweiten Stufe auf das Kühlwasser übertragen. Dabei erwärmt sich das Kühlwasser der Kühlung 8 von 14,7 °C auf 24,5 °C. Der Hauptanteil des so vorgekühlten Sole-Ablauf wird vor die ersten Stufe der Neutralisation 1 in Form des Rückführstromes 9 in Höhe von 120 m³/h gefahren. Ein kleinerer Teilstrom 7' dieser Sole betreibt in einem Nebenkreislauf die Mischdüsen 21. In diesen Strom werden nach Vorgabe der pH-Regelung PH2 120,0 1/h an Lauge an der Dosierstelle 7" und 0,7 1/h an Säure an der Dosierstelle 7''' zu dosiert. Die Rückkopplung der Dosiereinrichtung K5 erfolgt wieder durch einen Durchflussmesser F5. Beim Fördern des Nebenstromes 7' durch die Mischdüsen 21 erfolgt die Homogenisierung der Reaktionsmischung 18b in der Neutralisationszone 17b und es stellt sich ein pH-Wert von 9,2 ein, der im Ablauf 7 dieser Neutralisationsstufe 2 zur Kühlung 8 durch die pH-Messung PH2 gemessen wird.

Die Reaktionsmischung 18b gelangt in Form des Stromes 10 aus der zweiten Stufe 2 über einen Überlauf in die dritte Stufe der Neutralisation 3, welche aufgrund des 3-fachen Fassungsvolumens eine deutlich höhere Verweilzeit realisiert. Dieses Volumenverhältnis von dem Volumen der zweiten zum Volumen der dritten Stufe wurde ausgeführt, um ein Aufschaukeln der Regelungen und einer damit verbundenen Resonanzkatastrophe zu vermeiden. Aus dieser dritten Stufe wird ebenfalls ein Hauptstrom 11 der Reaktionsmischung 18c entnommen und der Kühlung 12 zugeführt. In jenen Prozessschritt wird die Neutralisationswärme der dritten Stufe auf das Kühlwasser übertragen. Dabei erwärmt sich das Kühlwasser der Kühlung 12 von 14,7 °C auf 29 °C. Im Gegenzug kühlt sich die Reaktionsmischung 18c von 36,5 °C auf 29 °C ab. Für die Kühlung der ersten, zweiten und dritten Stufe (8 und12) wird ein Kühlwasservolumenstrom von 466 m³/h benötigt. Nach erfolgter Kühlung betriebt der Nebenkreislauf 11' die Mischdüsen 22 der dritten Neutralisationsstufe 3. In diesen Strom werden nach Vorgabe der pH-Regelung PH3 28,0 1/h an Lauge an der Dosierstelle 11" und 34,0 1/h an Säure an der Dosierstelle 11''' zu dosiert. Beim Fördern des Nebenstromes 11' durch die Mischdüsen 22 erfolgt die Homogenisierung der Reaktionsmischung 18c in der Neutralisationszone 17c und es stellt sich ein pH-Wert von 8,6 ein, der im Strom 13 durch die pH-Messung PH3 gemessen wird. Zur Absicherung der Erfassung des Abgabe pH-Wert aus der dritten Stufe und aus Verfügbarkeitsanforderungen an die Messtechnik wurde diese pH-Messung dreifach (redundant) ausgeführt. In Abhängigkeit des Füllstandes in die dritten Reaktionsstufe 3, wird über eine Füllstandsregelung L1 die Reaktionsmischung 18c bei Einhaltung der Abgabekriterien pH-Wert (Messung PH3 und PH4) und Temperatur (Messung T3) im Verfahrensschritt 14 ausgeschleust. Es werden 58,7 m³/h bei einem konstanten Füllstand von 60,8 % abgegeben. Bei Überschreitung der Grenzwerte für die Parameter der resultierenden Sole in Strom 13 wird die Abgabe unterbrochen und der Volumenstrom 13 in Form des Stromes 16 wieder zurück zur dritten Neutralisationsstufe 3 gefördert. Es kann damit im ersten Schritt Sole in der zweiten und dritten Reaktionsstufe (2 und 3) kurzfristig zwischengepuffert. Dazu werden im regulären Betrieb jene beiden Reaktionsstufen nur zu ca. ¾ gefüllt betrieben. Im zweiten Schritt wird, falls das Nachregeln des Kreislaufbetriebs der dritten Stufe nicht erfolgreich ist, wird der Zustrom an Säure und damit Lauge in die erste Stufe sukzessive herunter gefahren (siehe Konzept Lastreduzierung).

### Details zur Ausführung der Dosiereinrichtungen:

Die Lauge für die erste Stufe 1 wird aus dem Netz über zwei parallel angeordnete Ventile K4 dosiert, die eine gestaffelte Ventilgröße (kvs-Wert) aufweisen. Das feine Ventil wird direkt geregelt und hat einen um Faktor 10 geringeren Maximaldurchsatz als das gröbere Ventil. Letzteres wird langsamer von der Stellgröße des kleinen Ventils geregelt, damit es zu keiner Resonanz zwischen den Ventilen kommt. Wenn das kleinere Ventil beim Hochfahren der Produktion über eine Rampe an seine maximale Öffnung kommt, wird das gröbere Ventil geringfügig geöffnet. Dadurch kann das kleinere wieder etwas schließen. Dieses Anstoßen des größeren Ventils erfolgt so häufig, bis der erforderliche Ziel-pH-Wert erreicht wird. Ebenso schließt das gröbere Ventil schrittweise, wenn das feine Ventil zu schließen droht. Somit kann eine schnelle und auch genaue Regelung des Laugenstromes erreicht werden. Im Übergangsbereich zur ersten Öffnung des gröberen Ventils wird eine Hysterese gefahren, weil die Ventile im Grenzbereich nicht mehr linear dosieren. So fährt das kleine Ventil in diesem Bereich über den gesamten Stellbereich, während es bei höheren Volumenströmen zwischen 20 und 80 % Stellgröße bleiben soll.

Dieses hier am Beispiel der ersten Stufe beschriebene Grundprinzip wird analog auch in der zweiten Stufen 2 an der Natronlaugedosierung K5 und dritten Stufe 3 an der Natronlaugedosierung K6 umgesetzt. Die zweite und die dritte Stufe versuchen primär die vorgegebenen pH-Werte einzuregeln. Während die Bandbreite für die dritte Stufe durch die Abgabegrenzen vorgegeben sind, kann die erste und zweite Stufe entsprechend der Leistungsfähigkeit der Regelungen vorgegeben werden. Da die erwarteten Dosierströme an Natronlauge in der dritten Stufe sehr klein sind, erfolgt die die Dosierung über ein Ventil und parallel über eine Verdrängerpumpe.

Aufgrund der hohen Genauigkeitsanforderungen durch die angestrebten pH-Werte der Stufen an die Dosierung, ist ein Überschwingen möglich. Zwar läuft aus den vorherigen Stufen nach der Korrektur der Regelung wieder saure Lösung nach, aber wegen der zum Teil langen Verweilzeiten wurde zusätzlich eine Dosierung an Säure an den beiden Stufen 2 und 3 realisiert. Das einfache Regelventil wird wieder über den nachfolgenden Durchflussmesser geführt.

### Details zur Ausführung des Regelungskonzeptes:

Das hier beschriebene umfassende Verfahrenskonzept basiert auf einem Regelungskonzept, welches durch die Messung vieler Prozessgrößen wie Eingangsvolumenströme, Eingangsdrücke sowie Temperatur, Füllstand und pH-Wert je Reaktionsstufe und weiterhin die Überwachung der Kühlwassertemperatur gekennzeichnet ist, erlaubt einerseits den vollautomatisierten Betrieb der Anlage über eine intelligente Prozesssteuerung und andererseits eine bestimmte Varianz der Prozessparameter der Eingangsmedien (Konzentration, Druck und Menge), auf die sich das Gesamtsystem automatisiert einstellt. Dabei ist im Normalbetrieb ein direkter Eingriff des Operators nach dem Starten der Anlage nicht erforderlich. Somit kommt je Stufe eine Regelungskreis zum pH-Wert zum Einsatz, der die Mengen an benötigtem Neutralisationsmittel bestimmt und an den Dosierventilen einstellt. Dementsprechend wird pro Stufe ein konstanter pH-Wert anvisiert, der sich mit steigender Reaktionsstufenzahl dem Ziel-pH-Wert annähert.

Das integrierte Konzept zur Lastregelung ermöglicht die Neutralisationsanlage unter effizienter Auslastung zu fahren und vereinfacht die Bedienung der Anlage deutlich. Die Lastregelung nimmt eine automatische Reduzierung der Last vor, um kritische Prozessgröße unterhalb ihrer Grenzwerte zu halten. Somit kann die Kapazität der Neutralisationsanlage der erforderlichen Neutralisationskapazität optimal und ökonomisch angepasst werden. Dabei wird die Neutralisationsanlage automatisch unter maximaler Last bei Einhaltung der vorgegeben Grenzwerte für die Prozessparameter der Produktlösung und optimaler Ausnutzung der Anlagenkapazität bei maximalem Umsatz gefahren. Bei dieser Lastregelung unter Berücksichtigung der Regelung von lastabhängigen Prozessgrößen wird die Vorgabe einer konstanten Last-Sollwerts für den zu neutralisierenden HCl-Strom (4) durch den Anlagenfahrer mit einer automatischen Laständerung durch das im Prozessleitsystem im Falle des Annäherns von Prozessgrößen an ihrem oberen Grenzwert kombiniert. Dieses Konzept ist für Anwendungen geeignet, in denen die Last eine inverse Wirkrichtung auf die Prozessgrößen hat, d.h. eine Erhöhung/Erniedrigung der Last zu einem Anstieg/Absenken der Prozessgröße führt. Im Normalbetrieb, d.h., dass die berücksichtigten Prozessgrößen (T1, PH1, PH2, T2, PH3, T3, PH4 sowie weitere Qualitätsgrößen (Trübe und Leitfähigkeit)) sich unterhalb ihres Grenzwerts befinden, wird die durch den Anlagenfahrer vorgegebene Last gefahren. Die Tatsache, dass die kritischen Prozessgrößen im unkritischen Bereich sind, zeigt dem Anlagenfahrer an, dass der Sollwert der Last durch einen Eingriff des Anlagenfahrers erhöht werden kann. Wenn die jeweilige Prozessgröße sich ihrem oberen Grenzwert annähert, wird eine automatische Laständerung durch das Prozessleitsystem vorgenommen, um die abweichende Prozessgröße unterhalb ihres Schwellwerts zu halten. Die automatische Laständerung erfolgt über für die jeweilige Prozessgröße vorgesehene Regelkreise (z.B. PID, MPC). Hierfür sind für die Lastvorgabe und die Prozessgrößen jeweils überlagerte Master-Regelkreise vorgesehen, die das Ziel haben die jeweilige Prozessgröße mit der Last als Stellgröße auf ihren Sollwert zu regeln . Die Stellgrößen der überlagerten Master-Regelkreise sind jeweils Sollwerte für den unterlagerten Regelkreis (Slave), der über einen Aktor (z.B. Ventil K1) in den Prozess eingreift, so dass bei den vorherrschenden Druckverhältnissen und den gegebenen Ventileigenschaften sich der vom Slave-Regler geforderte Strom einstellt.

Eine weitere regelungstechnische Optimierung der Prozessführung besteht in der automatischen Kühlwasserregelung. Die Prozesstemperaturen der ersten sowie zweiten und dritten Neutralisationsstufe werden gemessen und bei Überschreitung der Sollwerte wird mittels Aktoren in Form von Regelventilen automatisch der Kühlwasserstrom erhöht. Dabei besteht für die Temperaturmessung der ersten Neutralisationsstufe (T1) ein Regelkreis auf Kühlwassermenge der Kühleinrichtung der ersten und zweiten Stufe (8). Weiterhin wirkt die Temperaturmessung der dritten Neutralisationsstufe (T2) mittels direkter Regelung auf ein Regelventil der Kühleinrichtung der dritten Stufe (12). Damit reagiert das System auf Laständerungen oder Temperaturschwankungen und vermeidet den direkten Eingriff der automatischen Lastreduzierung bei Überschreitung einer Prozessgröße (siehe vorheriger Absatz).

Die pH-Regelungen der einzelnen Stufen sind nach Empfehlung der Literatur in Form einer "feed-forward"-Regelung umgesetzt (vgl. LIPTAK, Bela G.: Instrument Engineers Handbook. 4. Auflage, 2005, S. 2044 ff.). So wird nicht allein das lokale Volumen und der örtliche pH benutzt, sondern auch die jeweilige zulaufende Lösung der Vorstufe berücksichtigt. Für die erste Stufe fließen die zugeführten Volumenströme mit ein. Zudem werden noch die Versorgungsdrücke, die als Hauptstörgrößen erkannt wurden mit berücksichtigt. Für die zweite Stufe wird die benötigte Menge an Lauge aus dem Umwälzstrom zuzüglich der in die erste Stufe dosierten Ströme und dem pH-Wert. Für den dritten Strom geschieht diese Berechnung aus den zuvor dosierten Volumenströmen und dem pH-Wert am Auslauf der zweiten Stufe, der damit ja den Inhalt der Reaktionsmischung 18c repräsentiert.

Die Neutralisationsanlage ist gemäß den Sicherheitsanforderungen der im Einsatz befindlichen Chemikalien ausgeführt. Dabei wurden verträgliche Werkstoffe zum Einsatz gebracht und entsprechende Sicherheitskonzepte für starke Abweichung von Prozessgrößen vorgesehen. Zudem handelt es sich um eine geschlossene Anlage, bei der aufkommende saure Abluftströme zielgerichtet in eine bestehende Abluftaufbereitungsanlage gegeben werden.

Die Konzentration der entstehenden NaCl-haltigen Lösungen beträgt dabei 20 - 25 Gew.-%

Der erhaltene NaCl-haltige Strom 15 aus der Neutralisation G kann einer Chlor-Alkali-Elektrolyse L oder einer Entsorgungsstation M zugeführt werden.

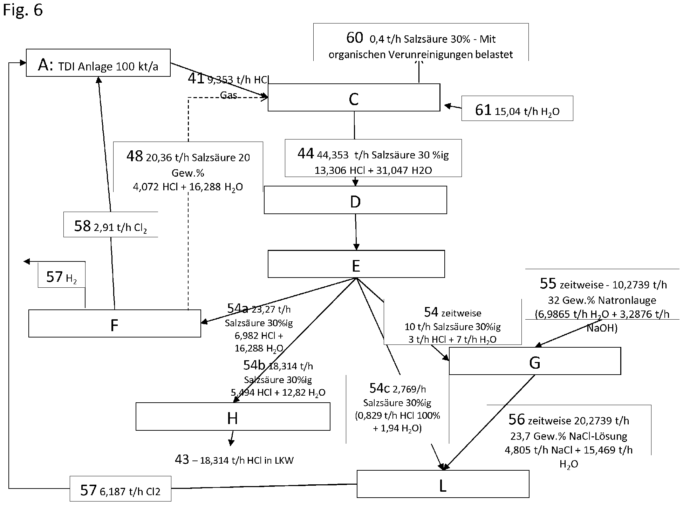

### Beispiel 2 - Salzsäure-Management im Isocyanat-Verbund (Fig. 6)

Das folgende Beispiel beschreibt das Salzsäuremanagement bei einem Produktionsverfahren (A) zur Herstellung von Isocyanaten mit einer Kapazität von 100.000 t/h Toluol-Diisocyanat (TDI), die mit einer Last von 11,5 T/h TDI betrieben wird und dabei 9,353 t/h HCl-Gas als Nebenprodukt erzeugt.

Am Standort befindet sich eine Salzsäure-Elektrolyse F in Form einer Salzsäure-Diaphragma-Elektrolyseanlage F mit einer Aufnahmekapazität von 3 t/h HCl (100%), eine Versandstation H zur Befüllung von Bahnkesselwagen und Lastkraftwagen 43. Im Anlagenverbund ist noch eine Natriumchlorid-Elektrolyse L angeschlossen, die eine Kapazität von 300.000 t/h Chlor aufweist und kann damit 0,829 t/h Salzsäure als 100% HCl gerechnet, aufnehmen. Mit im Verbund befindet sich eine Neutralisationsanlage G, die eine Salzsäuremenge von 10 t/h gerechnet als 100% HCl verarbeiten kann. Chlorwasserstoff 41, der bei der Isocyanat-Produktion A anfällt wird im Normalbetrieb einer HCl-Gasabsorption C zugeführt. Dabei wird als Absorptionsmedium die abgereicherte Salzsäure 48 aus der Salzsäure-Elektrolyse F mit einer Menge von 20,36 t/h und einer Konzentration von 20 Gew.% sowie 15,04 t/h Wasser 61 zugeführt. Verunreinigungen werden mit Wasser und Chlorwasserstoff aus der Absorptions-Einheit C entnommen. Hierbei werden 0,4 t/h einer mit Organik belasteten 30%igen Salzsäure 60 entnommen und entsorgt. Dabei wird aus der HCl-Absorption-Einheit C eine Menge von 44,353 t/h einer 30%igen Salzsäure 44 abgeführt.

Die Salzsäure 44 wird einer Reinigungsstation D zugeführt. In der Reinigungsstation D wird die Salzsäure 44 nochmals mit Aktiv-Kohle behandelt um Reste von Verunreinigungen zu entfernen.

Die gereinigte Salzsäure wird einem Salzsäure-Lager E zugeführt. Aus dem Lager E werden 23,27 t/h der 30%igen Salzsäure 54a entnommen und einer HCl-Diaphragmaelektrolyse F zugeführt. Hier wird aus der zugeführten Salzsäure 2,91 t/H Chlor 58 erzeugt und die abgreicherte Salzsäure 48, 20,36 t/h, mit einer Konzentration von 20 Gew.% der HCl-Absorption C zugeführt.

Aus dem Salzsäure-Lager E wird die am Standort befindliche Chlor-Alkali-Elektrolyse L zum Ansäuern der Sole mit 2,769 t/h Salzsäure 54c versorgt. Weiterhin werden 18,314 t/h 30%ige Salzsäure 54b dem Verkauf zugeführt. Hierzu werden Tankwagen 43 befüllt.

Da am Wochenende keine Entsorgung über LKWs möglich ist, wird die 18,314 t/h 30%ige Salzsäure im Lager E gelagert. Nach dem Wochenende hat sich das Lager E mit 879 t Salzsäure gefüllt, die zu Beginn der Woche entweder über LKW oder über Bahnkesselwagen abgenommen werden.

Kann die Salzsäure nicht verkauft bzw. abgenommen werden, wäre bei einer Lagerkapazität von 1000 t das Lager nach 54,6 h voll und die Produktion A von TDI müsste mit den negativen wirtschaftlichen Auswirkungen eingestellt werden. Dieser Zustand kann z.B. an verlängerten Wochenenden oder über Weihnachten oder Ostern eintreten.

In diesem Fall wird ein Teil von 10 t/h der Salzsäure 54 aus dem Lager E einer Neutralisationsstation G zugeführt und dort gemäß Beispiel 1 mit konzentrierter Natronlauge 55 neutralisiert. Hierbei werden 10,2739 t/h 32 Gew.%ige Natronlauge 55 eingesetzt. Dabei entstehen 20,2739 t/h Natriumchloridlösung 56 mit einer Konzentration von 23,7 Gew.-% Natriumchlorid. Diese Natriumchloridlösung 56 wird der NaCl-Elektrolyse L zugeführt. Aus der NaCl-Elektrolyse L werden unabhängig von der Zuführung von Natriumchlorid-Lösung 56 aus der Neutralisation G immer 6,187 t/h Chlor 57 dem chemischen Prozess A, der TDI Herstellung zurückgeführt.

## Patentansprüche

1. Verfahren zur flexiblen Steuerung der Verwendung von Salzsäure (54) mit einer HCl-Konzentration von mindestens 10 Gew.-%, insbesondere mit einem Volumenstrom von mindestens 1 m³/h, erhalten aus einem kontinuierlichen chemischen Produktionsverfahren (A) **dadurch gekennzeichnet, dass** gereinigte Salzsäure (54) aus einem Salzsäurelager (E) wahlweise einer Versandstation (H), einer HCl-Elektrolyse-Station (F) und einer Chloralkali-Elektrolyse-Station (L), welche Abnahmestellen für die Salzsäure sind, oder einer Neutralisationsstation (G) zugeführt wird, indem bei Ausfall einer oder mehrerer der vorgenannten Abnahmestellen (H, F, L) oder bei Abnahmeengpässen der Abnahmestellen (H, F, L) die Salzsäure (54) der Neutralisationsstation (G) zugeführt und mit konzentrierter Alkalilauge (55), insbesondere mit konzentrierter Natronlauge, neutralisiert wird und die dabei entstehende Salzlösung (56) wahlweise der Chloralkali-Elektrolyse-Station (L) oder einer Entsorgungsstation (M) zugeführt wird.

2. Verfahren nach Anspruch 1, **dadurch gekennzeichnet, dass** das chemische Produktionsverfahren (A) ein Produktionsverfahren zur Chlorierung von organischen Verbindungen (z.B. Herstellung von Vinylchlorid), zur Phosgenherstellung und Phosgenierung insbesondere zur Herstellung von Isocyanaten, insbesondere bevorzugt von Methylendiisocyanat (MDI), Toluol diisocyanat (TDI) oder ein Verfahren zur Herstellung von Polycarbonat (PC), oder ein Verfahren zur Verbrennung chlorhaltiger Abfälle ist.

3. Verfahren gemäß Anspruch 1 oder 2, **dadurch gekennzeichnet, dass** in der HCl - Elektrolyse-Station (F) Salzsäure (54) zu Chlor (57) umgesetzt wird, wobei das Chlor in das chemische Produktionsverfahren (A) recycliert und dort chemisch umgesetzt wird.

4. Verfahren gemäß einem der Ansprüche 1 bis 3, **dadurch gekennzeichnet, dass** in der Chloralkali-Elektrolyse-Station (L) Alkalichlorid (56), insbesondere Natriumchlorid, ggf. erhalten aus der Neutralisations-Station (G), und Salzsäure zum Ansäuern der Alkalichloridlösung zu Chlor (57) umgesetzt wird, wobei das Chlor in das chemische Produktionsverfahren (A) recycliert und dort chemisch umgesetzt wird.

5. Verfahren gemäß einem der Ansprüche 1 bis 4, **dadurch gekennzeichnet, dass** in der Neutralisationsstation (G) ein mehrstufiges, insbesondere ein dreistufiges Neutralisationsverfahren angewendet wird.

6. Verfahren nach Anspruch 5, **dadurch gekennzeichnet, dass** die mehrstufige, insbesondere dreistufige kontinuierliche Neutralisation (G) von Salzsäure (4, 54) mit einer HCl-Konzentration von mindestens 10 Gew.-% und mit einem Volumenstrom von mindestens 1 m³/h, bevorzugt mindestens 5 m³/h, auf einen Ziel pH-Wert im Bereich von 3 bis 9, mit den folgenden Schritten durchgeführt wird:
A) Zuführen der zu neutralisierenden Salzsäure (4) und einem Anteil von 95%, bevorzugt mindestens 99% der stöchiometrisch benötigten Alkalilauge (5) in einer ersten Stufe (1) in einen Volumenstrom (9) neutralisierter Salzsäure, der gekühlt aus einer zweiten Stufe (2) zurückgeführt wird, anschließend Mischen der Stoffströme (4, 5, 9) und Ausreagieren der primären Reaktionsmischung (18a) in Neutralisations- und Verweilzone (17a) ausreagiert werden, wobei der pH Wert des aus der ersten Stufe (1) ablaufenden Stromes (6) mindestens pH 1 aufweist, wobei der Volumenstrom (7) der aus der zweiten Stufe (2) gekühlt zurückgeführt wird, wenigstens dem 3-fachen des Salzsäure-Volumenstromes entspricht, der in die erste Stufe (1) zugeführt wird,
B) Überführen des Volumenstroms (6) aus der ersten Stufe (1) in eine Neutralisationszone (17b) der zweiten Neutralisationsstufe (2), weiteres Einstellen des pH Wertes der sekundären Reaktionsmischung (18b) auf einen Wert von bevorzugt pH 3 mittels Zugabe von Alkalilauge (5') oder Salzsäure (4') in einem Nebenkreislauf (7'), wobei dieser Nebenkreislauf (7') resultiert aus der Entnahme eines Teilstroms aus dem zu kühlenden Hauptstrom (7) der zweiten Reaktionsstufe (2), wobei das Verhältnis des Volumenstroms (7) der neutralisierten Salzsäure zum Volumenstrom des Teilstroms (7') wenigstens 10 zu 1 beträgt und, nach erfolgter Kühlung (8) des Hauptstromes der zweiten Stufe, Rückführung eines weiteren größeren Teilstroms (9) der Sekundären Reaktionsmischung (18b) der zweiten Stufe (2) in die erste Neutralisationsstufe (1) zur Durchführung der Reaktion A),
C) Zuführen eines weiteren Teilstroms (10) aus der Sekundären Reaktionsmischung (18b) der zweiten Stufe (2) in eine Neutralisationszone (17c) einer dritten Neutralisationsstufe (3), weiteres Einstellen des pH-Wertes der tertiären Reaktionsmischung (18c) in der dritten Neutralisationsstufe (3) auf einen pH-Wert im Bereich von pH 3 bis pH 9 mittels Zugabe von Alkalilauge (5') oder Salzsäure (4') in einem weiteren Nebenkreislauf (11'), der der Neutralisationszone (17c) angeschlossen ist, wobei dieser Nebenkreislauf (11') aus einem kleineren Teilstrom des aus der dritten Stufe austretenden Hauptstroms (11) der Reaktionsmischung (17c) besteht, welcher einer Kühlung (12) zugeführt wird und wobei der größere Teilstrom (13) des aus der dritten Stufe austretenden Hauptstroms (11) nach erfolgter Kühlung (12) einer finalen Qualitätskontrolle auf Temperatur- und pH-Wert-Überwachung zugeführt wird und im Falle, dass dieser gekühlte Strom (13) der Tertiären Reaktionsmischung (18c) die Qualitätskriterien erfüllt, dieser Strom 13 als Produktstrom (15) entnommen wird, oder andernfalls die tertiäre Reaktionsmischung (18c) in die dritte Stufe (3) als Rückführstrom (16) zur weiteren pH-Wert Einstellung einzuleiten ist.

7. Verfahren gemäß Anspruch 6, **dadurch gekennzeichnet, dass** als Neutralisationsmittel Natronlauge, insbesondere Natronlauge mit einem Gehalt von NaOCl von weniger als 100 ppm, verwendet wird.

8. Verfahren gemäß Anspruch oder 7, **dadurch gekennzeichnet, dass** die mittlere Verweilzeit der primären Reaktionsmischung (18a) in der ersten Neutralisationsstufe (1) von 20s bis 3 min beträgt.

9. Verfahren gemäß einem der Ansprüche 6 bis 8, **dadurch gekennzeichnet, dass** die mittlere Verweilzeit der Sekundären Reaktionsmischung (18b) in der zweiten Neutralisationsstufe (2) von 15 bis 100 min beträgt.

10. Verfahren gemäß einem der Ansprüche 6 bis 9, **dadurch gekennzeichnet, dass** die mittlere Verweilzeit der Tertiären Reaktionsmischung (18c) in der dritten Neutralisationsstufe (3) von 45 bis 250 min beträgt.

11. Verfahren gemäß einem der Ansprüche 6 bis 10, **dadurch gekennzeichnet, dass** unabhängig voneinander die Temperatur der primären Reaktionsmischung (18a) am Auslauf der ersten Stufe (1) auf einen Wert im Bereich von 45 °C bis 80°C bevorzugt von 65 °C bis 70°C eingestellt wird, die Temperatur der sekundären Reaktionsmischung (18b), welche direkt in der zweiten Reaktionsstufe (2) gemessen wird, auf einen Wert im Bereich von 40 °C bis 75°C bevorzugt von 60°C bis 65°C eingestellt wird und die Temperatur der tertiären Reaktionsmischung (18c) am Auslauf der Kühlung der dritten Stufe (12) auf einen Wert im Bereich von 15 °C bis 55°C bevorzugt von 25 °C bis 50°C eingestellt wird.

12. Verfahren gemäß einem der Ansprüche bis 11, **dadurch gekennzeichnet, dass** das Mischen der Stoffströme (4, 5, 9) in der ersten Neutralisationsstufe (1) in einem statischen Mischer erfolgt, wobei der statische Mischer eine Mischgüte von mindestens 98% bevorzugt 99% aufweist.

13. Verfahren gemäß einem der Ansprüche 6 bis 12, **dadurch gekennzeichnet, dass** in der Neutralisationszone (17b) und der Neutralisationszone (17c) ein Puffervolumen zur Kompensation von Schwankungen des Eingangsvolumenstroms im Bereich von +/-20 % vorgesehen ist.

14. Verfahren gemäß einem der Ansprüche 6 bis 13, **dadurch gekennzeichnet, dass** die Vermischung der Sekundären Reaktionsmischung (18b) mit dem Teilstrom (4', 5', 7') und die Vermischung der Tertiären Reaktionsmischung (18c) mit dem Teilstrom (4', 5', 11') unabhängig voneinander unter Verwendung von Rührwerkzeugen (19) in der Neutralisationszone (17b) bzw. (17c) oder über Mischdüsen (20) erfolgt, die im Eingangsbereich der Zuleitungen der Teilströme (7') bzw. (11') zu der Neutralisationszone (17b) bzw. (17c) vorgesehen sind.
